# EUROPEAN PATENT SPECIFICATION

(11) **EP 3 396 177 B1**
(45) Date of publication and mention of the grant of the patent: **22.11.2023**
(21) Application number: 16877831.4
(22) Date of filing: 13.12.2016
(51) Int. Cl.: F16B 2/06, F16L 3/04, F16L 3/10, F16L 55/035, F16L 3/12, F16L 3/24

(54) **U-BOLT**
BÜGELSCHRAUBE
BOULON EN U

(30) Priority: 21.12.2015 ES 201531413 U
(43) Date of publication of application: 31.10.2018
(73) Proprietor: Abarcones Uco, S.L., 39300 Requejada (ES)
(72) Inventor: RÍOS GÓMEZ, Alejandro, 39312 Polanco (Cantabria) (ES)
(74) Representative: García Gómez, José Donato
(86) International application number: PCT/ES2016/070884
(87) International publication number: WO 2017/109249

(56) References cited:
- CN-Y- 2 498 431
- DE-A1-102009 000 865
- FR-A1- 2 777 968
- GB-A- 1 422 446
- JP-A- H09 296 881
- JP-A- 2004 254 462
- JP-U- S6 336 778
- JP-U- S58 142 470
- US-A- 2 526 902
- US-A- 5 014 940
- US-A- 5 205 022
- US-A- 5 215 281

## Description

### Object of the invention

The object of the present invention is a U-bolt comprising a metal piece of general "U"-shaped configuration, with a central portion intended to laterally embrace an element to be fixed, and extended by its ends in two straight sections intended to be introduced into holes of a cradle and/or a support piece; said straight sections having a threaded portion for mounting tightening nuts of the U-bolt and the cradle or support piece against opposite sides of the element to be fixed.

This U-bolt has constructive particularities aimed at improving the grip and hold of the element to be fixed and to prevent contact of the metal piece with the element to be fixed.

### Technical field of the invention

This U-bolt can be used in the fixing of various elements such as pipes, antennas, hoses, masts or the like to a fixed support.

These U-bolts have a complementary piece forming a base or support cradle for the element to be held.

### State of the art

U-bolts are known in which the metal piece is constituted of a cylindrical bar or metal rod in the shape of a "U" mentioned above.

The pipes or elements to be held with these types of U-bolts can be metallic or plastic, it being common practice to place, in the pipe or in the U-bolt itself, some element that allows insulating the pipe from the metal piece of the U-bolt.

To achieve this insulation, various techniques and elements are used:
- One solution is to place a piece of flexible plastic hose on the central portion of the U-bolt, covering this area, for which it is necessary to introduce the metal piece of the U-bolt through one of the ends of the hose until arranging them in the proper position. This operation is slow and complicated since the hose often folds during the introduction of the metal piece. Another disadvantage is that, once installed the U-bolt this piece of flexible hose, over time, cracks in the areas where it has a fold, even if it is only slight. This leads to causing a contact between the metal piece of the U-bolt and the pipe or element to be fixed. To avoid this contact, it is necessary to locate in the pipe the U-bolts that have damaged sections of hose, dismantle the affected U-bolts and proceed to installing another flexible hose.
- Another well known solution is to stick a plastic material for contact with the pipe on the inner part of the U-bolt. However, damp and rain in installations in the open air cause the material to come unstuck and thus to fail in its function.
- Another known system is to line the area of the pipeline where the U-bolt is going to be installed with a sheet of polymer, neoprene or other material which is fixed with straps on both sides. To do this, it is necessary to cut the sheet to be installed, place the straps and then the U-bolt. However, proper insulation between the sheet and the pipe is not achieved, and the sheet breaks and contact between the U-bolt and the pipe is produced over time.

All the previous solutions are costly work wise and economically when used on pipelines or pipes of medium or great length, where large amounts of U-bolts are placed at regular distances one from another, the insulation of the U-bolts, as well as the location of those damaged and their replacement for others, involving a lot of work time.

Some prior art documents are also known in which the central portion of the metal piece of the U-bolt is flattened with the aim of improving the settlement in the shape of the pipe or element to be held.

Specifically, the Spanish Patent ES 2 400 760 discloses a configuration procedure as well as the U-bolt created by means of this process, said U-bolt being formed from a metal bar, whose profile is modified through a process of machining to provide the central portion with a flattened shape. With this solution, there is no need to place metal plates in the central portion of the U-bolt for the settlement of the pipe or element to be fixed. However, this prior art document does not solve the problem of insulation and of the direct contact between the metal bar and the pipe.

The document WO 03/035295 discloses a U-bolt and the mode of creation thereof on the basis of a metal bar that is subjected to a machining process to give the arched central portion a flat shape. This solution, like the previous one, is only to settle the pipe or element to be held in the U-bolt and does not resolve the problem of insulation between said elements.

The document US 5,014,940 discloses a clamp assembly comprising a split sleeve shock absorbing cushion and a U-shaped rod or bolt member. The cushion insert may be made of an elastomeric material such as a thermoplastic elastomer. This material allows the cushion insert to be moulded by conventional injection moulding.

### Description of the invention.

The U-bolt object of the present invention is defined in the independent claim. It comprises a metal piece of general "U"-shape configuration with an extended central portion in two straight sections that have a threaded section for mounting tightening nuts of the U-bolt against the element to be fixed; and a cradle or support piece provided with holes for through mounting of the straight sections of the metal piece, has constructive particularities aimed at improving the grip and hold of the element to be fixed and providing a permanent insulation (acoustic, cathodal and vibration-proof) between the metal piece of the U-bolt and the pipe, mast or element to be fixed.

For this purpose and in accordance with the invention, the metal piece of the U-bolt comprises an over-moulded plastic coating which covers at least the central portion of said metal piece and defines on the inner side of said central portion a contact surface of the coating with the pipe or element to be fixed.

The above mentioned coating of plastic material is over-moulded on the metal piece during the manufacturing process of the U-bolt, so the metal piece and the coating are closely and inseparably connected to each other, said coating of thermoplastic material providing the contact surface of the U-bolt with the element to be fixed and effective insulation between the element to be fixed and the metal piece of the U-bolt.

The thermoplastic nature of said coating, as well as a physical separation between the metal piece and the element to be fixed is a vibration-proof, electrical and thermal insulation, also avoiding that potential problems of corrosion of the metal piece could affect the pipe or element to be fixed.

The contact surface of the over-moulded coating is oriented perpendicularly in relation to a median plane defined by the central portion and the straight sections of the metal piece, which ensures that the contact of said surface with the pipe or element to be fixed is a superficial and not a line or point contact, as is the case with other U-bolts on the market.

This characteristic combined with thermoplastic nature of the material forming the over-moulded coating increases the grip and hold of the element to be fixed, making it unnecessary to carry out an excessive tightening of the U-bolt against the pipe or element to be fixed.

According to the invention, the contact surface of the coating with the pipe or element to be fixed protrudes above and/or below from the rest of the coating and has on its rear side reinforcement ribs formed in the plastic material of the over-moulded coating itself. In one embodiment of the invention this U-bolt comprises a cradle of thermoplastic material provided with a central seat for the support of the element to be fixed and side flanges equipped with holes for passage of the straight sections of the metal piece, so that the joint use of the U-bolt with previously over-moulded coating and the cradle of plastic material allows immobilising the element to be fixed, in a both acoustically and electrically insulated way, and without any direct contact with any support element.

### Description of the figures

In order to complement the description that is being carried out and with the purpose of facilitating the understanding of the features of the invention, the present description is accompanied by a set of drawings wherein, by way of a non-limiting example, the following has been represented:
- Figure 1 shows a perspective view of one exemplary embodiment of a U-bolt according to the invention.
- Figure 2 shows a plan view of the U-bolt of the previous figure in mounted position.
- Figure 3 shows a profile view of the U-bolt in mounted position and sectioned along the A-A' vertical plane referred to in Figure 2; and an enlarged detail of said section.
- Figure 4 shows a perspective view of the U-bolt of the previous figures establishing the fixing of an element, in this case a pipe, with respect to a fixed support.

### Preferred embodiment of the invention

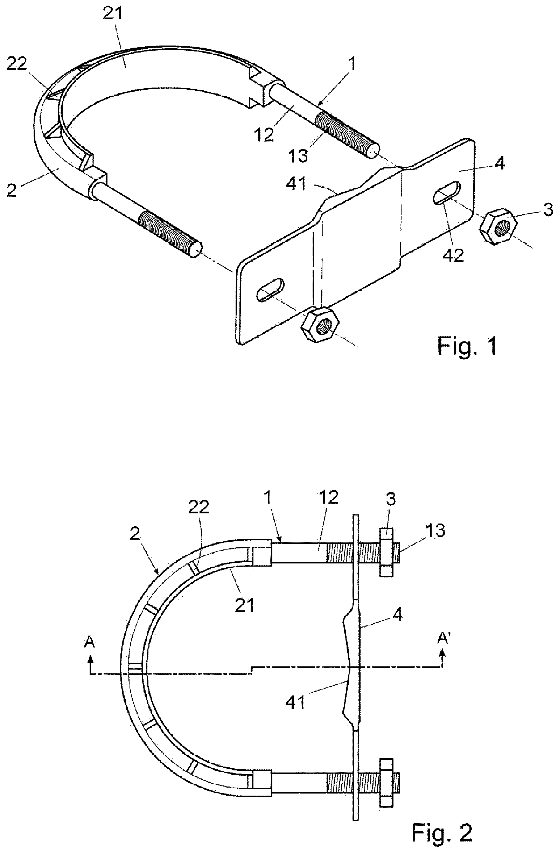

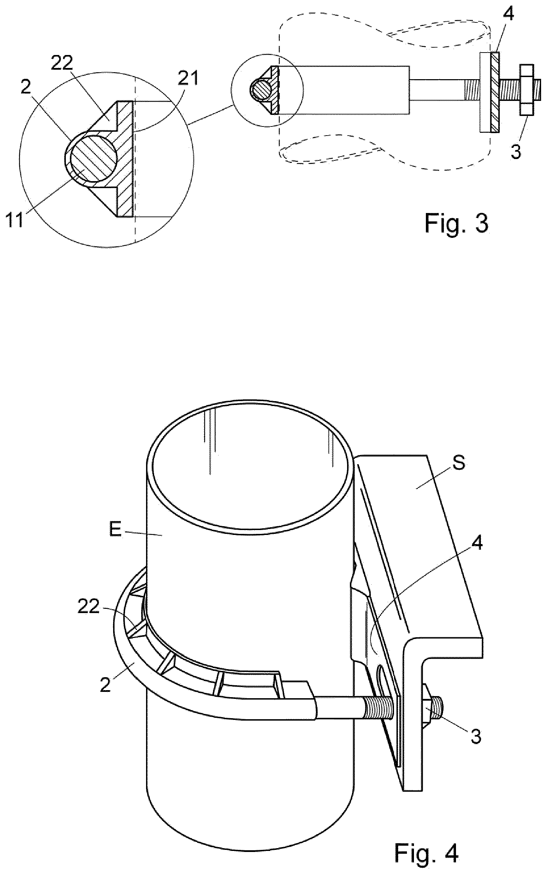

In Figure 1, the U-bolt comprises a metal piece (1) of general "U"-shaped configuration which has a curved central portion (11) visible in the section of Figure 3, and extended by its ends in two straight sections (12) provided with an end threaded section (13) for the mounting of nuts (3).

The metal piece (1), which in this case is a cylindrical section rod, comprises an over-moulded coating (2) of thermoplastic material which covers the central portion (11) of the metal piece (1) and defines on the inner side a contact surface (21) of said coating with an element (E) to be fixed, represented in Figures 3 and 4 as a pipe.

This contact surface (21), arranged perpendicularly to the median plane defined by the central portion (11) and the straight sections (12) of the metal piece (1), protrudes above and below the rest of the coating, as can be seen in the enlarged detail of Figure 3, in order to increase the contact surface with the element (E) to be fixed.

The coating (2) of thermoplastic material has reinforcing ribs (22) on the rear side of the contact surface (21).

In an exemplary embodiment shown in the accompanying figures, the U-bolt comprises a cradle (4) also of thermoplastic material having on the side facing the contact surface (21) of the thermoplastic coating a seat (41) for supporting the element (E) to be fixed, as shown in Figure 4.

As can be seen in Figures 1 and 2, the central seat (41) is formed by a dihedral angle converging at a central edge, in order to provide a stable support for elements (E) of different diameters.

This cradle (4) has lateral flanges provided with holes (42), in this case laterally elongated, for the passage of the straight sections (12) of the metal piece (1) of the U-bolt.

As can be seen in Figure 4, this U-bolt allows to fix an element (E), for example a pipe, to a support (S) in a way that by means of tightening the nuts (3) it is achieved that the U-bolt applies frontal pressure by means of the thermoplastic coating (2) to the element (E) to be fixed against the cradle (4), also of thermoplastic material, such that the pipe or element (E) to be fixed does not come into contact with the metal piece (1) of the U-bolt or with the support (S) which is usually also metallic in nature, thus ensuring electrical insulation of the element (E) to be fixed and avoiding possible transmissions of sound and vibration between the element (E) to be fixed and the support (S) in question, also avoiding possible corrosion problems that could affect the pipe or element (E) to be fixed.

The application of the coating (2) of thermoplastic material on the metal piece (1) by over-moulding ensures that the coating (2) and the metal piece (1) are closely linked, without the possibility of relative movement, also achieving that the U-bolt adapts perfectly to the surface of the pipe or element (E) to be fixed, with appropriate insulation and without the possibility of damp filtration.

It should be noted that the coating (2) may be made with different thermoplastic materials depending on the characteristics of the element (E) to be fixed and the weather conditions in the area where it will be installed; for example, in a marine or terrestrial environment, or an environment with extreme hot or cold temperatures. For example, in pipe installations subjected to vibrations due to the site of their placement, such as the engine room of a boat, the U-bolts with their coating of suitable material will absorb vibrations without subjecting the pipe to the same.

Another advantage of this U-bolt is that the coating can be carried out with coloured thermoplastic materials avoiding subsequent tasks of painting the pipe or the U-bolt once installed, as currently occurs.

The application of the coating (2) on the metal piece (1) is carried out using known moulding techniques, introducing the metal piece into an injection mould and then injecting the hot thermoplastic material into the mould.

Preferably, the metal piece (1) of the U-bolt will be formed in stainless steel, zinc-plated, galvanised, etc. while the thermoplastic material making up the coating (2) may consist of, for example, a polyethylene, a polypropylene or polyacetal; without ruling out the use of other thermoplastic materials of suitable properties for this application.

Once the nature of the invention as well as an example of preferred embodiment have been sufficiently described, it is stated for all pertinent purposes that the materials, form, size and arrangement of the elements described are susceptible to changes, provided these do not involve an alteration of the characteristics of the invention that are claimed subsequently.

## Claims

1. A U-bolt, comprising a metal piece (1) of general "U"-shaped configuration, with a central portion (11) intended to laterally embrace an element (E) to be fixed, and extended in two straight sections (12) intended to be introduced into holes in a cradle (4) and/or a support (S); said straight sections (12) having a threaded section (13) for mounting tightening nuts (4) for the U-bolt and for the cradle (4) and/or the support (S) against opposite sides of the element (E) to be fixed; **characterised in that** the metal piece (1) comprises an over-moulded coating (2) of thermoplastic material which covers at least the central portion (11) of said metal piece (1) and which defines on the inner side of the central portion (11) a contact surface (21) of said coating (2) with the element (E) to be fixed, and wherein the contact surface (21) protrudes above and/or below from the rest of the coating (2), and has reinforcing ribs (22) on the rear side of the contact surface (21).

2. The U-bolt according to claim 1, **characterised in that** the metal piece (1) is a cylindrical section rod.

3. The U-bolt according to claim 1, **characterised in that** the contact surface (21) of the coating (2) is arranged perpendicular to a median plane defined by the central portion (11) and the straight sections (12) of the metal piece (1).

4. The U-bolt according to claim 1, **characterised in that** it comprises a cradle (4) of thermoplastic material having a central seat (41) for supporting the element (E) to be fixed and lateral flanges provided with holes (42) for passage of the straight sections (12) of the metal piece (1).

5. The U-bolt according to claim 5, **characterised in that** the central seat (41) of the cradle (4) consists of a dihedral angle converging on a central edge.

## Patentansprüche

1. Bügelschraube, umfassend ein Metallteil (1) mit im Wesentlichen "U"-förmiger Konfiguration, mit einem zentralen Abschnitt (11), der dazu bestimmt ist, ein zu befestigendes Element (E) seitlich zu umschließen, das sich in zwei geraden Abschnitten (12) erstreckt, die dazu bestimmt sind, in Löcher in einer Gegenplatte (4) und/oder einem Träger (S) eingeführt zu werden; wobei die geraden Abschnitte (12) einen Gewindeabschnitt (13) zum Befestigen von Spannmuttern (4) für die Bügelschraube und für die Gegenplatte (4) und/oder den Träger (S) an gegenüberliegenden Seiten des zu befestigenden Elements (E) aufweisen; **dadurch gekennzeichnet, dass** das Metallteil (1) eine umspritzte Beschichtung (2) aus thermoplastischem Material umfasst, die zumindest den mittleren Abschnitt (11) des Metallteils (1) bedeckt und die auf der Innenseite des mittleren Abschnitts (11) eine Kontaktfläche (21) der Beschichtung (2) mit dem zu fixierenden Element (E) definiert, und wobei die Kontaktfläche (21) über den und/oder unter dem Rest der Beschichtung (2) hinausragt und Verstärkungsrippen (22) auf der Rückseite der Kontaktfläche (21) aufweist.

2. Bügelschraube nach Anspruch 1, **dadurch gekennzeichnet, dass** das Metallteil (1) ein Stab mit zylinderförmigen Querschnitt ist.

3. Bügelschraube nach Anspruch 1, **dadurch gekennzeichnet, dass** die Kontaktfläche (21) der Beschichtung (2) senkrecht zu einer Mittelebene angeordnet ist, die durch den mittleren Abschnitt (11) und die geraden Abschnitte (12) des Metallteils (1) definiert ist.

4. Bügelschraube nach Anspruch 1, **dadurch gekennzeichnet, dass** sie eine Gegenplatte (4) aus thermoplastischem Material mit einer mittleren Aufnahme (41) zum Tragen des zu befestigenden Elements (E) und seitlichen Flanschen, die mit Öffnungen (42) für den Durchgang der geraden Abschnitte (12) des Metallteils (1) bereitgestellt sind, umfasst.

5. Bügelschraube nach Anspruch 5, **dadurch gekennzeichnet, dass** die mittlere Aufnahme (41) der Gegenplatte (4) aus einem Flächenwinkel besteht, der an einer mittleren Kante zusammenläuft.

## Revendications

1. Boulon en "U" comprenant une pièce métallique (1) ayant une configuration générale en forme de "U" avec une partie centrale (11) destinée à entourer latéralement un élément (E) à fixer, et prolongée par deux sections droites (12) destinées à être introduites dans des trous d'une plaque de retenue (4) et/ou d'un support (S) ; lesdites sections droites (12) ayant une section filetée (13) pour le montage d'écrous de serrage (4) pour le boulon en U et pour la plaque de retenue (4) et/ou le support (S) contre des côtés opposés de l'élément (E) à fixer; **caractérisé en ce que** la pièce métallique (1) comprend un revêtement surmoulé (2) en matière thermoplastique qui recouvre, au moins, la partie centrale (11) de ladite pièce métallique (1) et qui définit sur le côté intérieur de la partie centrale (11) une surface de contact (21) dudit revêtement (2) avec l'élément (E) à fixer, et dans lequel la surface de contact (21) fait saillie au-dessus et/ou en dessous du reste du revêtement (2), et comporte des nervures de renforcement (22) sur le côté arrière de la surface de contact (21).

2. Boulon en "U", selon la revendication 1, **caractérisé en ce que** la pièce métallique (1) est une tige de section cylindrique.

3. Boulon en "U", selon la revendication 1, **caractérisé en ce que** la surface de contact (21) du revêtement (2) est disposée perpendiculairement à un plan médian défini par la partie centrale (11) et les sections droites (12) de la pièce métallique (1).

4. Boulon en "U", selon la revendication 1, **caractérisé en ce qu'**il comprend une plaque de retenue (4) en matière thermoplastique ayant un siège central (41) pour supporter l'élément (E) à fixer et des brides latérales munies de trous (42) pour le passage des sections droites (12) de la pièce métallique (1).

5. Boulon en "U", selon la revendication 5, **caractérisé en ce que** le siège central (41) de la plaque de retenue (4) consiste en un angle dièdre convergeant sur un bord central.
